# EUROPEAN PATENT APPLICATION

(11) **EP 2 879 024 A1**
(43) Date of publication of application: **03.06.2015**
(21) Application number: 13306654.8
(22) Date of filing: 02.12.2013
(51) Int. Cl.: G06F 3/039, G06F 3/041, G06F 3/044, H04B 5/00

(54) **Method of communication for transmitting an encoded data stream between a communication device and a tactile device comprising a capacitive touch surface**

(71) Applicant: Gemalto SA, 92190 Meudon (FR)
(72) Inventor: Normend, Yoan M., 92190 Meudon (FR); Antoine, Matthieu, 92190 Meudon (FR)
(74) Representative: Cour, Pierre

(57) **Abstract**

The invention relates to a communication device 1 configured to transfer an encoded data stream to a tactile device comprising a capacitive touch surface. The communication device 1 comprises at least a first actuator 3 and a second actuator 4. The first actuator 3 is able to be activated in order to emulate touch and touch release on a first area of the touch surface 8. The second actuator 4 is able to be activated in order to emulate touch and touch release on a second area of the touch surface 8. The first actuator 3 is configured to transmit a first data type, and the second actuator 4 is configured to transmit a second data type.

## Description

### TECHNICAL FIELD

The present invention relates to a method for transmitting an encoded data stream between a communication device and a tactile device comprising a capacitive touch surface. The present invention also relates to a communication device to implement the transmission steps of the method and to a tactile device to implement the reception steps of the method.

### BACKGROUND

Currently, many methods enable to establish communications between two devices by using the different interfaces available on the market.

The need to interconnect electronic devices in order to transfer data is increasing. Many solutions are based on the use of communication protocols or standards.

One inconvenience is resulting from the various means to interface devices together, in rparticular tablets and mobile phones. These means are heterogeneous and are using more and more proprietary connectors or protocols.

A way to deal with this issue is to use a common interface to all these devices and having homogeneous capabilities widely shared among them.

Some solutions enable to transfer data through the capacitive touch screen of a device. Such a solution is for example described in the EP patent application n°13306315.6 filed on September 26, 2013. In this document, the actuator of a communication device is configured to emulate touch and touch release on the capacitive touch screen of a tactile device. Each touch or touch release generates a modification of the capacitive state of an area of the touch screen. When the capacitive state of the touch screen is modified, an event is raised at the tactile device level. To distinguish the different values, for example to distinguish a value '0' from a value '1', at the tactile device level, the tactile device needs to figure out the time between two consecutive events. Besides, to get all happening events, the tactile device scans the touch screen line by line to measure possible modifications of the capacitive state of an area of the touch screen. The time needed to scan the whole screen is called T_{scan}. When a modification of the capacitive state is detected, the tactile device raises an event containing some information such as the event type (touch or touch release for example), the event position on the touch screen, and a timestamp. As above-explained, the timestamp enables to distinguish a '0' from a '1'.

However, the time between two consecutive events as figured out by the tactile device does not systematically correspond to the time between two consecutive events as emulated by the communication device. As a matter of fact, the timestamp given by the tactile device is not reliable under certain conditions, for example when the processor of the tactile device has too many tasks to perform at the same time. Consequently, the tactile device may read a '1' when a '0' is send and conversely.

### SUMMARY OF THE INVENTION

The invention overcomes the above mentioned technical problem by providing an efficient and robust data encoding method between a communication device comprising an actuators configured to emulate touch and touch release and a tactile device comprising a capacitive touch surface.

To that purpose, the invention brings an efficient data coding scheme to communicate with a tactile device with a touch surface without any need of time reference by spatially encoding the data instead of temporally encoding them.

More precisely, one aspect of the invention relates a method of communication for transmitting an encoded data stream between a communication device and a tactile device comprising a capacitive touch surface. The communication device comprises at least a first actuator and a second actuator. The first actuator is able to be activated in order to emulate touch and touch release on a first area of the touch surface. The second actuator is able to be activated in order to emulate touch and touch release on a second area of the touch surface. The method comprises a transmission step comprising at least an activating step, the activating step being a step of activating :
- either the first actuator to transmit a data of the first data type;
- or the second actuator to transmit a data of the second data type.

As a matter of fact, the invention enables to get rid of the time dependency during the step of determining the value of the transmitted data by spatially coding the transmitted data: each actuator corresponds to a data type and the transmission of a data of one type occurred by activating the corresponding actuator. The method according to the invention is then more robust than the previous methods.

The method according to the invention may also comprise one or several of the following features, taken individually or according all possible technical combinations.

According to one embodiment, each actuator may be:
- in a touch state wherein said actuator emulates touch or
- in a release state wherein the actuator emulates touch release,
each activating step being a step of modifying the state of one of the actuators.

Thus, if the state of the first actuator is modified, a data of the first type is transmitted whereas if the state of the second actuator is modified, a data of the second type is transmitted. Only matters the actuator which undergoes a modification of its state, and not the duration of that state. Thus, even if the timestamp of the event detected by the tactile device is not accurate, the value of the transmitted data is correct thanks to the fact that all events are captured by the tactile device in the right order if communication timings comply with the specification.

According to one embodiment, the method comprises at least two activating steps, the two activating steps being spaced out by at least a duration corresponding to the minimal duration needed by the tactile device to scan the whole touch surface in order to detect a modification of the local capacitance. Otherwise an activating step may be missed by the tactile device. As a matter of fact, the duration between two consecutive activating steps corresponds at least to the time needed for the tactile device to scan the whole touch surface.

The previously mentioned steps are preferably implemented by the communication device.

According to one embodiment, the method may further comprise a reception step, the reception step comprising the following steps:
- Detecting a modification of a capacitive state in an area of the touch surface;
- Locating the area of the touch surface where the modification of capacitive state has occurred.

As a matter of fact, if a modification of capacitive state occurs in an area corresponding to the first actuator, a data of the first type has been transmitted. If a modification of capacitive state occurs in an area corresponding to the second actuator, a data of the second type is transmitted.

According to one embodiment, the method further comprises a step of determining a binary value in function of the area of the touch surface in which the modification of capacitive state has occurred. As a matter of fact, if a modification of capacitive state occurs in an area corresponding to the first actuator, it means that a data of the first type has been transmitted and a first binary value is associated to the modification. If a modification of capacitive state occurs in an area corresponding to the second actuator, it means that a data of the second type is transmitted and a second binary value is associated to the modification.

The method comprises then a step of retrieving an encoded data stream transmitted by the communication to the tactile device by gathering all the binaries values determined by the tactile device.

The reception step and the step of determining a binary value are preferably implemented by the tactile device.

A second aspect of the invention concerns a communication device configured to transfer an encoded data stream to a tactile device comprising a capacitive touch surface. The communication device comprises at least a first actuator and a second actuator. The first actuator is able to be activated to emulate touch and touch release on a first area of the touch surface. The second actuator is able to be activated to emulate touch and touch release on a second area of the touch surface. The first actuator is configured to transmit a data of a first data type, and the second actuator is configured to transmit a data of a second data type.

The communication device may also comprise one or several of the following features taken individually or according all possible combinations.

According to one embodiment, the encoded data stream is binary encoded, the first data type corresponding to a first binary value, the second data type corresponding to a second binary value.

According to one embodiment, each actuator may be:
- in a touch state wherein said actuator emulates touch or
- in a release state wherein the actuator emulated touch release,
the first actuator being changing of state to transmit a data of the first data type and the second actuator being changing of state to transmit a data of the second data type.

According to one embodiment, the first and second actuators comprise at least two capacitive touch screen emulator. Each actuator is preferably connected to a capacitive touch screen emulator configured to modify the state of said actuator.

Another aspect of the invention concerns a tactile device for receiving an encoded data stream from a communication device, the tactile device comprising a capacitive touch surface, the tactile device comprising detection sensors configured:
- to detect a modification of a capacitive state that occurred in an area of the touch surface;
- to locate the area of the touch surface in which the modification of capacitive state has occurred.

The tactile device may also comprise one or several of the following features taken individually or according all possible combinations.

According to different embodiments, the touch surface may be a touch screen or a touch actuator.

According to different embodiments, the tactile device may be a smart phone, a tablet, a handset, a computer.

According to one embodiment, the detection sensors are further configured to detect the order in which several modifications of the capacitive state of an area of the touch surface have occurred.

According to one embodiment, the tactile device further comprises a calculator configured to retrieve a binary encoded bit stream, the bit stream comprising a first binary value each time that an event of the first type is raised, the bit stream comprising a second binary value each time that an event of the second type is raised.

### BRIEF DESCRIPTION OF THE DRAWINGS

Figure 1 represents a communication device according to one embodiment of the invention.
Figure 2 represents a tactile device according to one embodiment of the invention.
Figure 3 represents the steps of a method according to one embodiment of the invention.
Figure 4 represents schematically a scheme encoding used by a method according to the invention.
Figure 5 represents the capacitive state of one actuator.

### DETAILED DESCRIPTION

The present invention will now be described with reference to the accompanying drawings. The drawings are intended to provide one example of how the invention can be implemented and are not intended to limit the applicability of the present invention.

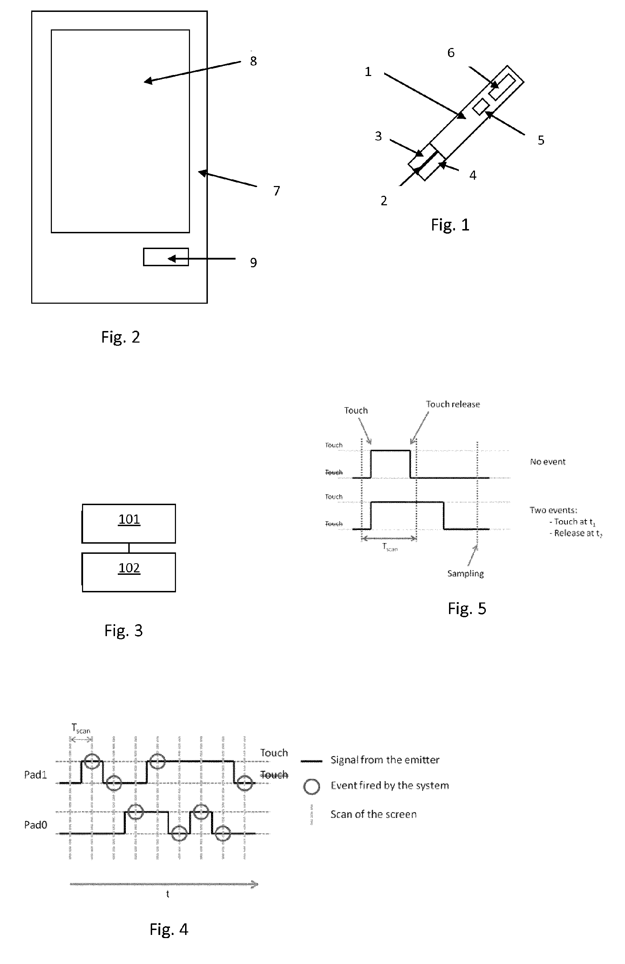

Figure 1 represents a communication device 1 according to one embodiment of the invention. The communication device 1 at least two actuators: a first actuator 3 and a second actuator 4. The first actuator 3 is able to be activated in order to emulate touch and touch release on a first area of a capacitive touch surface. The second actuator 4 is able to be activated in order to emulate touch and touch release on a second area of a capacitive touch surface. The first actuator 3 enables to transmit a first data type. The second actuator enables to transmit a second data type.

Each actuator 3, 4 is preferably connected to a capacitive touch screen emulator that provide a plate with a control of charge that emulate different state of touched or untouched. Each actuator 3, 4 may be placed in two states:
- A touch state in which the actuator 3, 4 emulates touch;
- A release state in which the actuator 3, 4 emulates touch release.

Each actuator 3, 4 stays preferably in contact with the touch surface or in a close vicinity. When an actuator changes its state, a modification of the capacitive state of an area of the touch surface in contact with said actuator occurs.

The communication device 1 also comprises control unit 5 enabling to control the state of each actuator 3, 4. The actuator and control unit 5 may be those described in the European patent application filed on December 2, 2013, under the number 13306650.6.

The communication device 1 also comprises encoding means 6 enabling to transfer to the control unit a data stream, preferably in a binary coding scheme.

Figure 2 represents a tactile device 7. The tactile device 7 may be a tablet, a handset, a smart phone. The tactile device 7 comprises a capacitive touch surface 8. The touch surface 8 is preferably a touch screen, but it also may be a touch pad. The tactile device 7 also comprises detection sensors 9 configured to detect a modification of the capacitive state of an area of the touch surface 8. To that purpose, the detection sensors 9 may for example scan the touch surface 8 line by line to measure a possible change in local capacitance. The time needed for the detection sensors to scan the whole screen is called here T_{scan}. When a change of local capacitance is detected, the detection sensors 9 fires an event at the application level containing some information among which the event type, a position on the touch surface and a timestamp. Even if the timestamp lacks of precision, the order of events fired by the tactile device 7 still remains correct. In function of the location of the modification of local capacitance, the tactile device 7 can then retrieve which type of data has been transmitted: a modification of the capacitive state of an area of a touch surface corresponding to the first actuator 3 means that a data of the first type has been transmitted. A modification of the capacitive state of an area of a touch surface corresponding to the second actuator 4 means that a data of the second type has been transmitted. A tactile device does not need anymore to determine the duration of a of a capacitive state to retrieve which type of data has been transmitted, but it only needs to determine the location of said modification.

This invention brings an efficient data coding scheme to communicate with a tactile device equipped with a capacitive touch screen through this capacitive touch screen without any time reference, i.e. which does not rely on timestamps.

Figures 3 to 5 illustrate the steps of a method according to the invention. The method comprises first a transmission step 101, implemented by the communication device 1. During the transmission step, the communication device 1 transmits an encoded data stream. The encoded data stream is preferably binary encoded. Consequently, the encoded data stream comprises a first data type, for example '1', and a second data type, for example '0'. Consequently, to get rid of the time dependency, only one actuator changes its state at a time. One actuator encodes '1' and the other '0'. That means that a bit is sent by toggling the dedicated actuator. In other words, each time that a data of the first type must be transmitted, the state of the first actuator 3 is modified: consequently, if the first actuator 3 was in a touch state, it becomes in a release state and conversely. Each time that a data of the second type must be transmitted, the state of the second actuator is modified: consequently, if the second actuator 4 was in a touch state, it becomes in a release state and conversely.

The method comprises then a reception step 102 implemented by the tactile device. As represented , the reception step 102 is implemented periodically at with a period corresponding to T_{scan}. At each scan of the touch surface, if a change in the local capacitance of the touch surface is detected, the detection sensors of the tactile device detect the position of the area of the touch surface in which the modification of capacitive state has occurred. The detection sensors may also retrieve a timestamp associated with the local capacitance change. However, the timestamp does not need to be precise: it only needs to enable a classification of the local capacitance changes in chronological order. Each time that a local capacitance change is detected, the detection sensors fire an event containing at least the position of the change and a timestamp. If the local capacitance change has occurred in a first area corresponding to the first actuator, the tactile device retrieves that a first data type, i.e. a '1", has been sent. If the local capacitance change has occurred in a second area corresponding to the second pas, the tactile device retrieves that a second data type, i.e. a "0" has been sent. For example, figure 4 represents the changes of the local capacitance of a touch surface. The first line "e "Pad1" represents the modifications of the local capacitance in an area corresponding to the first actuator. The second line "Pad0" represents the changes of local capacitance in an area corresponding to the second actuator. For both lines, when the line is at a first level, it means that the actuator contacting the corresponding area is in a release state. When the line is at a second level, it means that the actuator contacting the corresponding area is in a touch state. The data stream sent by the communication device is then: 11010001.

Even if timestamps are not reliable, the order of the events captured by the tactile device remains ok. For the example above, the following events are fired, in this order:
E1(x1,y1) → 1
E2(x1, y1) → 1
E3(x0, y0) → 0
E4(x1, y1) → 1
E5(x0, y0) → 0
E6(x0, y0) → 0
E7(x0, y0) → 0
E8(x1, y1) → 1

The distinction between the two actuators is done thanks to the x and y position given in the event structure. This distinction can be done during a prior operation (like approach phase). Bits are captured on the fly in the tactile device.

There is only one timing constraint. Owing to the way a capacitive touch screen works, two events shall be spaced out by at least T_{scan} otherwise an event might be missed as represented on figure 5.

As mentioned above, this method does not rely on timestamps given by the device (smartphone, tablet) which increases the reliability.

Another advantage of this method is that only one actuator changes its state at every bit transmitted avoiding synchronization issues.

It allows also a faster transmission rate compared to a one-touch based protocol.

While the present invention has been particularly described with reference to the preferred embodiments, it should be readily apparent to those of ordinary skill in the art that changes and modifications in form and details may be made without departing from the scope of the invention. For example, even if the invention has been described in the case of two actuators, it could be generalized to a higher number of actuators with a specific symbol transmission.

## Claims

1. Method of communication for transmitting an encoded data stream between a communication device (1) and a tactile device (7) comprising a capacitive touch surface (8), **characterized in that** the communication device (1) comprises at least a first actuator (3) and a second actuator (4), the first actuator (3) being able to be activated in order to emulate touch and touch release on a first area of the touch surface, the second actuator (4) being able to be activated in order to emulate touch and touch release on a second area of the touch surface (8), the method comprising a transmission step (101) comprising at least an activating step, the activating step being a step of activating :
- either the first actuator (3) to transmit a data of the first data type;
- or the second actuator (4) to transmit a data of the second data type.

2. Method of communication according to claim 1, wherein each actuator (3, 4) may be :
- in a touch state wherein said actuator emulates touch or
- in a release state wherein the actuator emulates touch release,
the activating step being a step of modifying the state of one of the actuators.

3. Method of communication according to any of the previous claims, further comprising several activating steps, two consecutive activating steps being spaced out by at least a duration corresponding to the minimal duration needed by the tactile device to scan the whole touch surface in order to detect a modification of capacitive state.

4. Method of communication according to any of the previous claims, further comprising a reception step (102), the reception step comprising the following steps:
- Detecting a modification of a capacitive state in an area of the touch surface (8);
- Locating the area of the touch surface (8) in which the modification of capacitive state has occurred.

5. Method of communication according to the previous claim, further comprising a step of determining a binary value in function of the area of the touch surface (8) in which the modification of capacitive state has occurred.

6. Communication device (1) configured to transfer an encoded data stream to a tactile device (7) comprising a capacitive touch surface (8), **characterized in that** the communication device (1) comprises at least a first actuator (3) and a second actuator (4), the first actuator (3) being able to be activated in order to emulate touch and touch release on a first area of the touch surface (8), the second actuator (4) being able to be activated in order to emulate touch and touch release on a second area of the touch surface (8), the first actuator (3) enabling to transmit a first data type, the second actuator (4) enabling to transmit a second data type.

7. Communication device (1) according to the previous claim, wherein the encoded data stream is binary encoded, the first data type corresponding to a first binary value, the second data type corresponding to a second binary value.

8. Communication device (1) according to any of claims 6 or 7, wherein each actuator (3, 4) may be :
- in a touch state wherein said actuator emulates touch or
- in a release state wherein the actuator emulated touch release,
the first actuator (3) changing of state to transmit a data of the first data type and the second actuator (4) changing of state to transmit a data of the second data type.

9. Tactile device (7) for receiving an encoded data stream from a communication device (1), the tactile device (7) comprising a capacitive touch surface (8), the tactile device (7) comprising detection sensors (9) configured :
- to detect a modification of a capacitive state in an area of the touch surface;
- to locate the area of the touch surface in which the modification of capacitive state has occurred.

10. Tactile device (7) according to the previous claim, wherein the detection sensors (9) are further configured to detect the order in which several modifications of the capacitive state of an area of the touch surface (8) have occurred.

11. Tactile device (7) according to any of claims 9 or 10, further comprising a calculator configured to retrieve a binary encoded bit stream, the bit stream comprising a first binary value each time that an event of the first type is raised, the bit stream comprising a second binary value each time that an event of the second type is raised.
